# EUROPÄISCHE PATENTSCHRIFT

(11) **EP 0 828 136 B1**
(45) Veröffentlichungstag und Bekanntmachung des Hinweises auf die Patenterteilung: **20.11.2002**
(21) Anmeldenummer: 97114355.7
(22) Anmeldetag: 20.08.1997
(51) Int. Cl.: G01B 7/28, G01B 7/30, B23K 9/127, B23K 37/053

(54) **Verfahren und Vorrichtung zur Erkennung der Winkellage eines im wesentlichen zylindrischen Körpers**
Method and apparatus for determining the angular position of substantially cylindrical bodies
Procédé et appareil pour la détermination de la position angulaire des corps essentiellement cylindriques

(30) Priorität: 31.08.1996 DE 19635349
(43) Veröffentlichungstag der Anmeldung: 11.03.1998
(73) Patentinhaber: Neue Maschinenfabrik GmbH, 38120 Braunschweig (DE)
(72) Erfinder: Genschow, Henning, Prof. Dr.-Ing., 38315 Schladen (DE); Herrmann, Gustav, Dipl.-Ing., 38319 Remlingen (DE)
(74) Vertreter: Leine, Sigurd, Dipl.-Ing.

(56) Entgegenhaltungen:
- EP-A- 0 057 512
- EP-A- 0 616 191
- EP-A- 0 674 345
- DE-A- 2 507 573
- DE-A- 3 234 396

## Beschreibung

Die Erfindung betrifft ein Verfahren der im Oberbegriff des Anspruchs 1 und eine Vorrichtung der im Oberbegriff des Anspruchs 6 genannten Art zur Erkennung der Winkellage einer Eigentümlichkeit in der Kontur einer Außenfläche eines im wesentlichen zylindrischen Körpers, insbesondere einer Schweiß-, Falz- oder Lötnaht einer Außenwandung eines Blechbehälters.

Bei der Fertigung von Blechbehältern ist es häufig erwünscht, diese Blechbehälter vor Durchführung weiterer Verarbeitungsschritte in eine bestimmte Winkellage zu bringen. Ein solcher weiterer Verarbeitungsschritt kann z.B. in der Anbringung von Henkeln bestehen, die in Lagerteilen schwenkbar gehalten sind, welche durch Punktverschweißung mit der Wandung des Behälters verbunden werden. Diese Punktverschweißung ist unerwünscht oder erschwert beispielsweise an Stellen, an denen sich eine Schweiß-, Falz- oder Lötnaht befindet, die sich in der Umfangswandung des im wesentlichen zylindrischen Behälters befinden.

Durch die Druckschrift "OPERATING INSTRUCTIONS B-202-A" der Firma MFB Maschinenfabrik in 38118 Braunschweig ist es bekannt, an der Außenwandung von Behältern Helligkeits- oder Farbmarken anzubringen und diese bei Drehung des Behälters optisch abzutasten, um danach die Winkellage des Behälters zu bestimmen und zu positionieren. Die Verwendung solcher optischer Marken hat jedoch den Nachteil, daß die Umfangsbahn, in der sich die Marke befindet, frei von anderen Helligkeits- oder Farbunterschieden sein muß, die Anlaß zu Fehlfeststellungen sein können. Entscheidender Nachteil ist es aber, daß solche optischen Marken keinen Bezug zu Schweiß- oder Lötnähten haben, so daß eine Winkelpositionierung in Abhängigkeit davon durch solche optischen Marken nicht möglich ist.

Durch EP 0 057 512 B1 ist es bekannt, die Oberfläche eines Behälters magnetisch abzutasten und so eine Schweiß- oder Lötnaht festzustellen. Diese Lösung läßt jedoch in der Praxis keine präzise Erkennung zu, da der Abstand zwischen magnetischem Taster und Objekt wegen Toleranz der Behälter vergleichsweise groß gehalten werden muß, wodurch die Empfindlichkeit der Vorrichtung gemindert und außerdem der Erfassungswinkel vergrößert und damit die Auflösung verringert wird.

Durch DE 43 04 451 C2 ist ein Verfahren zur Erkennung der Winkellage einer Eigentümlichkeit in der Kontur einer Außenfläche eines im wesentlichen zylindrischen Körpers bekannt, wobei der Körper um seine Rotationsachse gedreht und seine Außenfläche abgetastet wird, wobei die Kontur der Außenfläche abgetastet und in ein entsprechendes elektrisches Oberflächensignal umgewandelt wird. Es wird die Differenz zwischen den Oberflächensignalen und einem Mittelwert gebildet, wonach dann der Winkelbereich festgestellt wird, in dem eine Differenz vorliegt, und es wird ein dem Winkelbereich entsprechendes Winkelbereichssignal erzeugt. Dieses Verfahren ist verhältnismäßig aufwendig, und entsprechend aufwendig ist dann eine Vorrichtung, mit der dieses Verfahren durchgeführt wird.

Der Erfindung liegt die Aufgabe zugrunde, ein Verfahren und eine Vorrichtung der betreffenden Art anzugeben, das bzw. die eine einfache und zuverlässige Erkennung der Winkellage einer Eigentümlichkeit in der Kontur einer Außenfläche eines im wesentlichen zylindrischen Körpers, insbesondere einer Schweiß- oder Lötnaht einer Außenwandung eines Blechbehälters ermöglicht.

Die der Erfindung zugrundeliegende Aufgabe wird durch die Merkmale der unabhängigen Ansprüche 1 und 6 gelöst.

Grundgedanke der Erfindung ist es, ein elektrisches Oberflächensignal, das in Abhängigkeit von der bei Drehung des Körers abgetasteten Kontur gewonnen worden ist, in zweifacher Weise auszuwerten. Zum einen erfolgt eine Differenzbildung zwischen winkelmäßig dicht aufeinanderfolgenden Werten. Das kann vorzugsweise durch Differentiation erfolgen. Auf diese Weise lassen sich schnelle Änderungen in der Kontur der Oberfläche des Körpers feststellen, also auch die, die aufgrund einer Schweiß- oder Lötnaht vorliegen. Die Feststellung der Lage dieser Änderung erfolgt mit hoher Genauigkeit. Diesem Vorteil steht jedoch der Nachteil gegenüber, daß keine Unterscheidungsmöglichkeit zwischen einem Kratzer in der Kontur der Oberfläche des Körpers und dem Beginn einer Schweißnaht möglich ist.

Um nun feststellen zu können, ob es sich um einen Kratzer oder tatsächlich um eine Schweißnaht handelt, deren Umfangsausdehnung größer ist als die eines Kratzers, sieht die Erfindung eine weitere Verarbeitung des Oberflächensignals vor, bei der der Winkelbereich, in dem eine Differenz vorliegt, festgestellt wird. Dieses Winkelbereichssignal zeigt bei Überschreiten eines vorgegebenen oder vorgebbaren Schwellwertes an, ob die Winkelausdehnung der Eigentümlichkeit in der Oberfläche ein solches Maß hat, das nicht der Winkelausdehnung eines Kratzers entspricht. Dieses Winkelbereichssignal hat den Nachteil, daß in ihm kein bestimmter Ort in der Eigentümlichkeit festliegt.

Durch die erfindungsgemäße Kombination einer Differenzbildung oder Differentiation mit einer Bereichsbildung oder Integration wird der Vorteil beider Verarbeitungsweisen addiert, während die Nachteile eliminiert werden. Das Winkelbereichssignal stellt sicher, daß nur solche Differenz/Differentiationssignale zur Ortsbestimmung einer Schweiß- oder Lötnaht herangezogen werden, die innerhalb des Winkelbereichs des Winkelbereichssignals auftreten und somit mit hoher Sicherheit von der Vorder- oder Hinterkante einer Schweiß- und Lötnaht herrühren.

Die Abtastung der Kontur der Umfangsfläche kann grundsätzlich in jeder beliebigen, dem Fachmann geläufigen Weise erfolgen. Besonders zweckmäßig ist jedoch eine optoelektronische Abtastung, beispielsweise nach dem Prinzip der Triangulation.

Die Mittel zum Drehen des Körpers bestehen zweckmäßigerweise in einem Schrittschaltmotor, dessen Steuerimpulse von einem Taktgeber abgeleitet sind, der gleichzeitig die Mittel zur winkelabhängigen Differenzbildung oder Differentiation bzw. Integration steuert.

Im Augenblick der Erkennung der Winkellage der Eigentümlichkeit befindet sich normalerweise die Eigentümlichkeit im Bereich der Mittel zur Abtastung der Kontur der Oberfläche des zu prüfenden Körpers. Diese Winkellage kann jedoch für die weitere Verarbeitung, beispielsweise für die Anbringung eines Henkels an einen Blechbehälter, unzweckmäßig sein. Aus diesem Grund sieht eine Weiterbildung der Erfindung vor, daß der Körper nach Feststellung der Winkellage der Eigentümlichkeit um einen vorgegebenen Winkel in eine Arbeitsdrehlage gedreht wird.

Die der Erfindung zugrundeliegende Aufgabe wird in den Verfahrensansprüchen entsprechender Weise durch eine Vorrichtung gelöst, die in den Ansprüchen 6 bis 10 gekennzeichnet ist. Die obigen Ausführungen zu den Verfahrensansprüchen gelten daher für die Vorrichtungsansprüche entsprechend.

Anhand der Zeichnung soll die Erfindung näher erläutert werden.
- Fig. 1: zeigt eine teilweise perspektivische Seitenansicht eines Ausführungsbeispiels der Erfindung,
- Fig. 2: zeigt im Schnitt eine Wandung eines Behälters im Bereich einer Schweißnaht,
- Fig. 3: verdeutlicht den Verlauf des von der Kontur der Umfangsfläche abgeleiteten elektrischen Signals,
- Fig. 4a und 4b: zeigen ein Blockschaltbild eines Ausführungsbeispiels der Erfindung,
- Fig. 5: verdeutlicht den Verlauf des Integrationssignals im Bereich der Schweißnaht gemäß Fig. 2 und
- Fig. 6: verdeutlicht den Verlauf des Differenzsignals im Bereich der Schweißnaht gemäß Fig. 2.

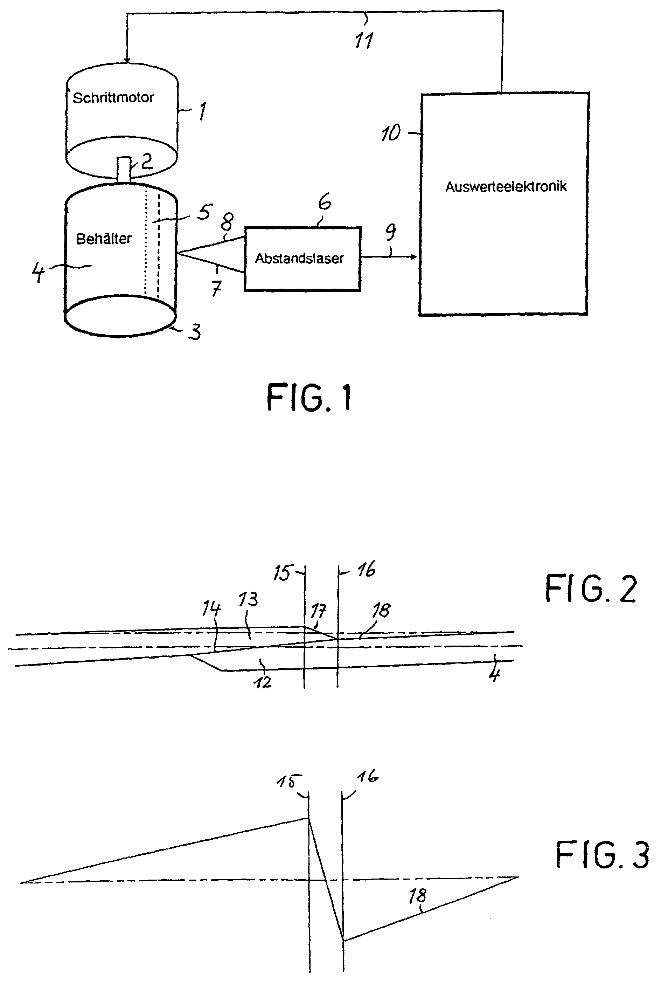

Fig. 1 zeigt in schematischer und teilweise perspektivischer Form einen Schrittmotor 1, der über eine Welle 2 einen Blechbehälter 3 dreht, in dessen Wandung 4 sich eine Schweißnaht 5 befindet.

Eine opto-elektronische Abstandsmeßeinrichtung 6 richtet einen Laserstrahl 7 auf die Oberfläche 4 des Behälters 3, von der er wenigstens teilsweise als Reflexionsstrahl 8 zurückreflektiert wird. Zwischen Laserstrahl 7 und Reflexionsstrahl 8 ist ein Winkel von ca. 30° gebildet. Die opto-elektronische Abstandsmeßeinrichtung 6 arbeitet mit Triangulation, wie das allgemein bekannt ist und daher keiner weiteren Erläuterung bedarf.

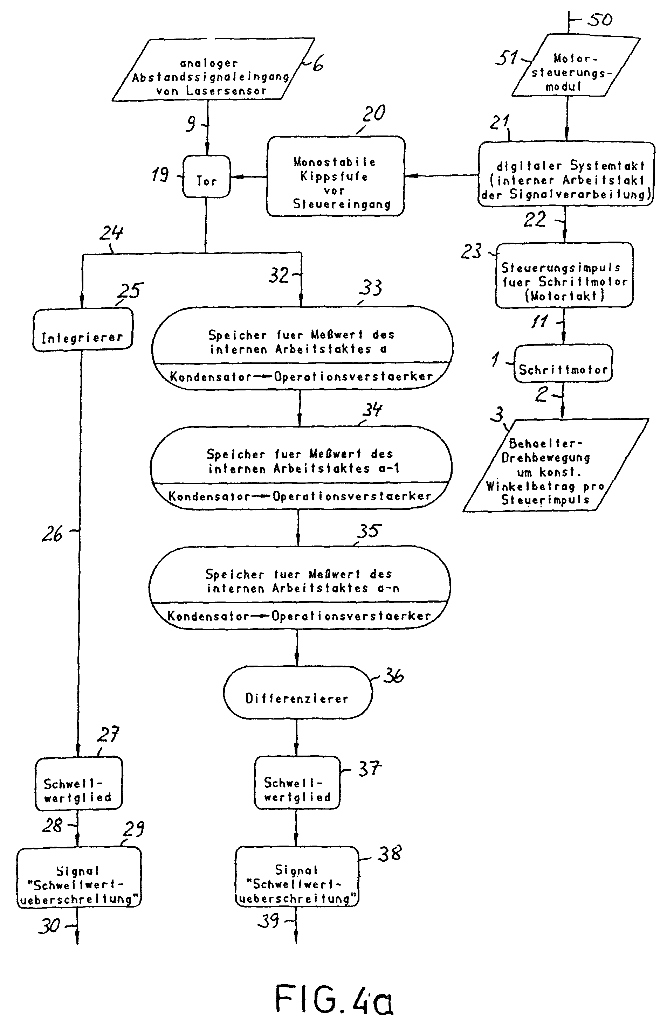

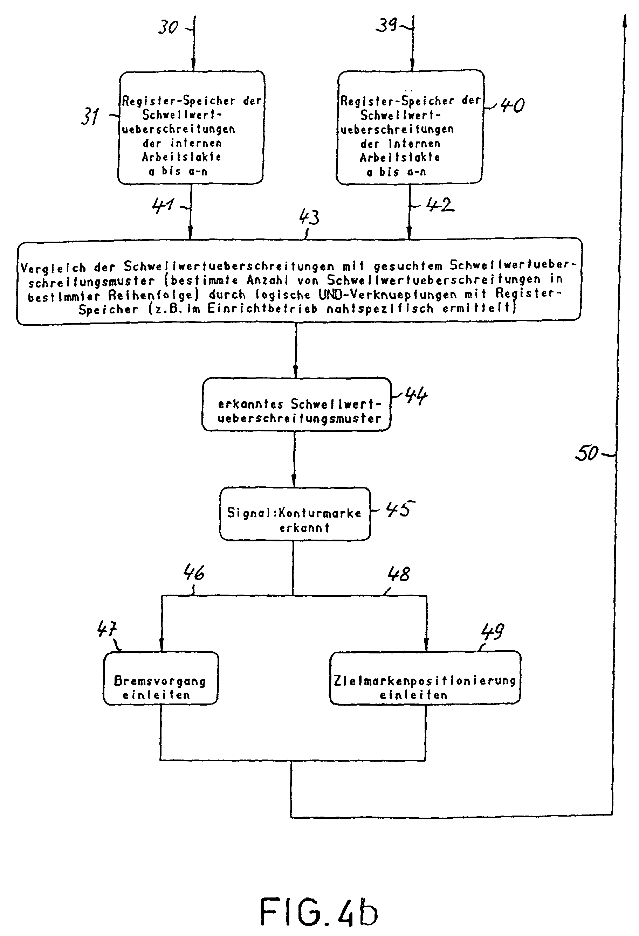

Die Abtastmeßeinrichtung 6 gibt über eine Leitung 9 ein elektrisches Oberflächensignal in eine Auswerteelektronik 10 ab, deren Einzelheiten nachfolgend anhand der Fig. 4a und 4b erläutert werden. Die Auswerteelektronik 10 erzeugt u.a. Taktsignale, die über eine Leitung 11 den Schrittmotor 1 steuern.

Fig. 2 zeigt im Schnitt die Wandung 4 des in Fig. 1 dargestellten Behälters 3. Ränder 12 und 13 sind im Bereich ihrer überlappung 14 miteinander verschweißt. In einem durch zwei Linien 15 und 16 gekennzeichneten Bereich fällt eine äußere Kante 17 zwar schräg, aber verhältnismäßig steil ab, und es ist diese Kante, die gemäß der Erfindung festgestellt werden soll, um den Behälter 3 gemäß Fig. 1 in eine bestimmte Winkellage zu bringen. Insgesamt weist die Wandung 4 eine Außenfläche 18 auf, deren Kontur vergrößert in Fig. 3 dargestellt ist. Das von der Abstandsmeßeinrichtung 6 über die Leitung 9 an die Auswertelektronik 10 gelieferte elektronische Signal hat den gleichen Verlauf wie die in Fig. 3 gezeigte Außenfläche 18.

In dem Blockschaltbild gemäß den Fig. 4a und 4b ist die Schaltung der Auswertelektronik 10 gemäß Fig. 1 schematisch verdeutlicht. Das von der Abstandsmeßeinrichtung 6, einem mit Triangulation arbeitenden Abstandslaser, über Leitung 9 abgegebene Signal gelangt in ein Tor 19, das über eine monostabile Kippstufe 20 von einem Taktgeber 21 gesteuert wird, der den Takt für das gesamte System liefert.

Die Taktimpulse aus dem Taktgeber 21 gelangen über eine Leitung 22 in einen Frequenzteiler 23, der über Leitung 11 Steuerungsimpulse an den Schrittmotor 1 gemäß Fig. 1 liefert, der über die in dieser Darstellung symbolisch durch eine Linie dargestellte Welle 2 den Behälter 3 schrittweise dreht.

Das Tor 19 läßt das Kontur- oder Abstandssignal von Leitung 9 jeweils nur für eine kurze Zeitspanne entsprechend der Impulse aus der monostabilen Kippstufe 20 durch. Somit ergibt sich immer die gleiche öffnungsdauer des Tores, also eine konstante Impulsdauer und damit eine drehgeschwindigkeitsunabhängige Signalverarbeitung für jeden internen Arbeitstakt und damit gleichzeitig proportional für jeden Motorimpuls und entsprechenden Behälterdrehwinkel. Das bedeutet, daß die nachfolgende Verarbeitung des Oberflächensignals immer auf den Drehwinkel des Behälters 3 bezogen ist, da das Oberflächensignal pro Drehwinkel immer eine konstante Zeitdauer, d. h. Signalimpulsdauer anlegt. Hierdurch ergibt sich eine identische Konturbewertung sowohl während der Beschleunigungsund Bremsphasen als auch während der konstanten Drehgeschwindigkeit. Dadurch kann die Position der Naht und somit die Positionierung des Behälters 3 in sehr kurzer Zeit erfolgen.

Das aus dem Tor 19 kommende Signal gelangt über eine Leitung 24 in einen Integrierer 25, dessen Ausgangssignal über eine Leitung 26 einem Schwellwertglied 27 zugeführt wird, das bei Überschreitung des in ihm eingestellten oder einstellbaren Schwellwertes ein Signal über eine Leitung 28 an eine Signaleinrichtung 29, das eine Überschreitung des Schwellwertes anzeigt, und gleichzeitig über eine Leitung 30 ein Signal in einen Registerspeicher 31 liefert, der Schwellwertüberschreitungen für eine Zahl aufeinanderfolgender Arbeitstakte speichert.

Das Ausgangssignal von Tor 19 gelangt zusätzlich über eine Leitung 32 in schieberegisterähnlich angeordnete Speicher 33, 34 und 35, in denen die durch das Tor 19 getakteten Oberflächensignale für die Dauer eines internen Arbeitstaktes gespeichert und dann mit dem nächsten internen Takt an den folgenden Speicher weitergegeben werden. Die Speicher können z. B. jeweils durch einen Kondensator und einen nachfolgenden Operationsverstärker gebildet sein. Die Ansteuerung der Speicher durch die internen Takte ist nicht dargestellt.

Der Ausgang des letzten Speichers 35 ist mit einem Differenzverstärker 36 verbunden, in dem der im Schieberegister gespeicherte Oberflächenwert vom aktuellen Oberflächenwert subtrahiert wird. Der Differenzverstärker 36 verstärkt also die Differenz zwischen dem aktuellsten Oberflächensignal, wie es gerade durch das Tor 19 ankommt, und den um interne Takte, die durch die Zahl der Speicher 33, 34 und 35 gegeben ist, zurückliegenden Oberflächensignal, wie es am Ausgang des Speichers 35 anliegt. Durch das Weiterreichen des aufbereiteten Oberflächensignals im Arbeitstakt wird eine Differentiation des aufbereiteten Oberflächensignals zum Drehwinkel des Behälters möglich. Das Ausgangssignal am Differenzverstärker 36 ist somit abhängig von der Änderung des Oberflächensignals innerhalb der den zugehörigen Takten zugeordneten Winkeländerung.

Das Ausgangssignal des Differenzverstärkers 36 gelangt in ein Schwellwertglied 37, das bei Überschreiten eines voreingestellten und einstellbaren Schwellwertes ein Signal an eine Signaleinrichtung 38 abgibt, das weiter über eine Leitung 39 in einen Registerspeicher 40 gelangt.

Das auf einer Leitung 41 erscheinende Signal des Registerspeichers 31 und das auf einer Leitung 42 erscheinende Signal des Registerspeichers 40 werden in einer Vergleichseinrichtung 43 verglichen und durch logische Verknüpfungen (Boolesche Algebra) daraufhin untersucht, ob es innerhalb der zurückliegenden Arbeitstakte zu dem gesuchten Schwellwertüberschreitungsmuster kam. Das Schwellwertüberschreitungsmuster wird gebildet durch das Auftreten einer bestimmten Anzahl von Schwellwertüberschreitungen in einer bestimmten Reihenfolge innerhalb einer bestimmten internen Arbeitstaktzahl und damit eines bestimmten Drehwinkels des Behälters 3.

Hat die Vergleichseinrichtung 43 ein Schwellwertüberschreitungsmuster erkannt, so gibt sie ein entsprechendes Signal an eine Erkennungseinrichtung 44 und eine Signaleinrichtung 45 weiter, von wo es über eine Leitung 46 in eine Bremseinrichtung 47 gelangt, die einen Bremsvorgang für den Schrittmotor 1 bewirkt oder einleitet.

Das Signal aus der Signaleinrichtung 45 gelangt außerdem über eine Leitung 48 in eine Einrichtung 49, die einen Zielzähler aufweist, welcher eine vorgegebene Zahl von Taktimpulsen, die sie über eine nicht dargestellte Leitung erhält, abzählt und nach Erreichen dieser Zahl das Stillsetzen des Schrittmotors 1 wirksam werden läßt mit der Folge, daß die Schweißnaht 5 nach dem Erkennen noch über einen durch die Zahl der abgezählten Impulse vorbestimmten Winkel weitergedreht wird. Zum Zwecke des Stillsetzens bzw. des verzögerten Stillsetzens gelangen die Ausgangssignale der Bremseinrichtung 47 und der Einrichtung 49 über eine Leitung 50 in einen Motorsteuerungsmodul 51.

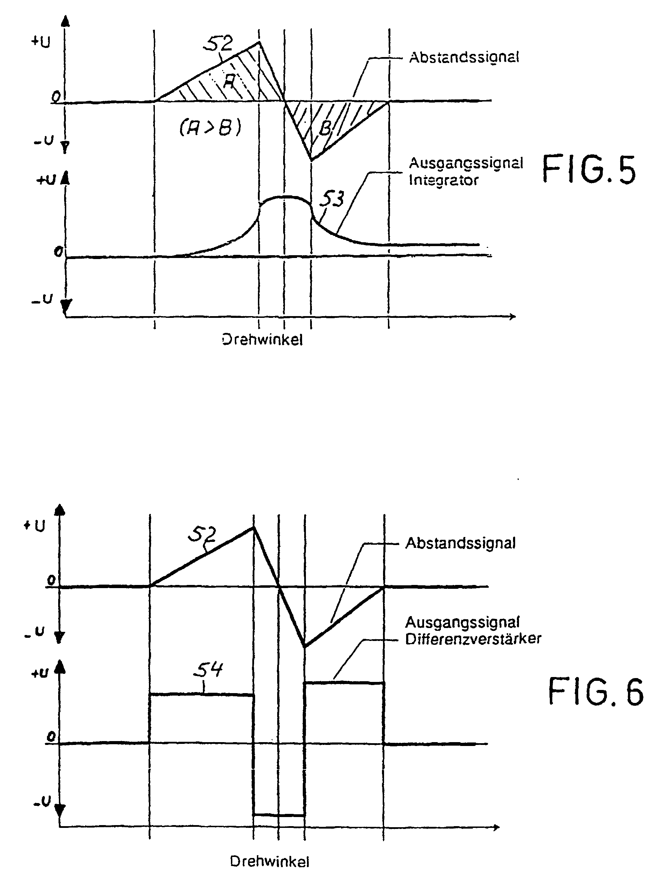

In der grafischen Darstellung gemäß Fig. 5 ist die Wirkungsweise des Integrierers verdeutlicht. In der oberen Hälfte der Fig. 5 ist der Verlauf des Oberflächensignals entsprechend der Außenfläche 18 in Fig. 3 durch eine Kurve 52 verdeutlicht, wobei die Flächen unter dieser Kurve mit den Buchstaben A und B bezeichnet sind, wobei A>B ist. Der Verlauf der Kurve 52 ist in Abhängigkeit vom Drehwinkel aufgetragen.

In der unteren Hälfte ist das auf der Leitung 26 erscheinende Ausgangssignal des Integrierers 25 als Kurve 53 aufgetragen.

In Fig. 6 ist die Arbeitsweise des Differenverstärkers 36 verdeutlicht. In der oberen Hälfte dieser Figur ist wieder wie in Fig. 5 durch Kurve 52 der Verlauf der Kontur der Oberfläche aufgetragen in Abhängigkeit vom Drehwinkel. In der unteren Hälfte ist durch eine Kurve 54 der Verlauf des Ausgangssignals des Differenzverstärkers 36 in Abhängigkeit vom Drehwinkel aufgetragen.

Aus den Fig. 5 und 6 ist erkennbar, daß sowohl die Bildung des Integrationssignals (Kurve 53) als auch die des Differenzsignals (Kurve 54) drehwinkelbezogen erfolgt, so daß also nur Abhängigkeit vom Drehwinkel und nicht von der Zeit besteht.

## Patentansprüche

1. Verfahren zur Erkennung der Winkellage einer Eigentümlichkeit (5) in der Kontur einer Außenfläche (4) eines im wesentlichen zylindrischen Körpers (3), wobei der Körper (3) um seine Rotationsachse gedreht wird,
- wobei die Kontur der Außenfläche (4) abgetastet und in ein entsprechendes elektrisches Oberflächensignal (52) umgewandelt wird,
- wobei ein Differenzsignal (54) zwischen zwei Werten des Oberflächensignals (52) gebildet wird,
- wobei der Winkelbereich, in dem ein Differenzsignal (54) vorliegt, festgestellt und ein entsprechendes Integrationssignal (53) erzeugt wird und
- wobei bei gleichzeitigem Überschreiten von für das Differenzsignal (54) und das Integrationssignal (53) vorgegebenen Schwellwerten ein Steuersignal erzeugt und dadurch das Drehen des Körpers beendet wird.

2. Verfahren nach Anspruch 1, **dadurch gekennzeichnet, daß** die Beendigung des Drehens des Körpers (3) mit einer vorgegebenen Verzögerung erfolgt.

3. Verfahren nach Anspruch 1, **dadurch gekennzeichnet, daß** das Differenzsignal (54) durch Differentiation des Oberflächensignals (52) erzeugt wird.

4. Verfahren nach Anspruch 1, **dadurch gekennzeichnet, daß** das Integrationssignal (53) durch Integration des Oberflächensignals (52) erzeugt wird.

5. Verfahren nach Anspruch 3 oder 4, **dadurch gekennzeichnet, daß** die Differentiation und/oder die Integration über einen Winkelbereich erfolgt.

6. Vorrichtung zur Erkennung der Winkellage einer Eigentümlichkeit (5) in der Kontur einer Umfangsaußenfläche (4) eines im wesentlichen zylindrischen Körpers (3), mit Mitteln (1) zur Drehung des Körpers (3) um seine Rotationsachse,
- mit Mitteln (6), die im Gebrauch die Kontur der Umfangsaußenfläche (4) des Körpers (3) abtasten und in ein entsprechendes elektrisches Oberflächensignal (52) umwandeln,
- mit Mitteln (36), die im Gebrauch ein Differenzsignal (54) in Abhängigkeit von einer Differenz zwischen zwei Werten des Oberflächensignals (52) erzeugen,
- mit Mitteln (25), die im Gebrauch den Winkelbereich, in dem ein Differenzsignal (54) vorliegt, feststellen und ein entsprechendes Integrationssignal (53) erzeugen,
- und mit Schwellwertmitteln (27, 37), in die jeweils Schwellwerte eingegeben sind und in die jeweils das Differenzsignal (54) und das Integrationssignal (53) einspeisbar sind und die so ausgestattet sind, daß bei Überschreitung des jeweiligen Schwellwertes jeweils Ausgangssignale erzeugt und in eine UND-Schaltung (43) eingespeist werden, die so ausgestattet ist, daß sie ein Steuersignal zum Stillsetzen der Mittel zum Drehen des Körpers (3) erzeugt, wenn sowohl ein schwellwertüberschreitendes Differenzsignal (54) als auch ein schwellwertüberschreitendes Integrationssignal (53) gleichzeitig anliegen.

7. Vorrichtung nach Anspruch 6, **dadurch gekennzeichnet, daß** der UND-Schaltung (43) eine Verzögerungsschaltung nachgeschaltet ist, die die Mittel zum Drehen des Körpers (3) mit einer vorgegebenen Verzögerung abschalten oder stillsetzen.

8. Vorrichtung nach Anspruch 6, **dadurch gekennzeichnet, daß** Mittel zur Erzeugung des Differenzsignals (54) durch Differentiation des Oberflächensignals (52) vorgesehen sind.

9. Vorrichtung nach Anspruch 6, **dadurch gekennzeichnet, daß** Mittel zur Erzeugung des Integrationssignals (53) durch Integration des Oberflächensignals (52) vorgesehen sind.

10. Vorrichtung nach Anspruch 8 und 9, **dadurch gekennzeichnet, daß** die Mittel zur Differentiation und/oder zur Integration diese Funktion über einen Winkelbereich durchführen.

## Claims

1. A method for determining the angular position of a peculiarity (5) in the contour of an outer face (4) of a substantially cylindrical body (3), whereby the body (3) is rotated around its axis of rotation,
- whereby the contour of the outer face (4) is scanned and converted into a corresponding electrical surface signal (52),
- whereby a differential signal (54) between two values of the surface signal (52) is formed,
- whereby the angular range in which a differential signal (54) is present is determined and a corresponding integration signal (53) is generated and
- whereby, upon the threshold values predetermined for the differential signal (54) and the integration signal (53) being exceeded, a control signal is produced and as a result the rotation of the body is ended.

2. A method according to Claim 1,
**characterised in that** the end of the rotation of the body (3) takes place with a predetermined delay.

3. A method according to Claim 1,
**characterised in that** the differential signal (54) is produced by differentiation of the surface signal (52) .

4. A method according to Claim 1,
**characterised in that** the integration signal (53) is produced by integration of the surface signal (52).

5. A method according to Claim 3 or 4,
**characterised in that** the differentiation and/or the integration takes place over an angular range.

6. An apparatus for detecting the angular position of a peculiarity (5) in the contour of a circumferential outer face (4) of a substantially cylindrical body (3), having means (1) for the rotation of the body (3) around its axis of rotation,
- having means (6) which in use scan the contour of the circumferential outer face (4) of the body (3) and convert it into a corresponding electrical surface signal (52),
- having means (36) which in use generate a differential signal (54) as a function of a difference between two values of the surface signal (52),
- having means (25) which in use determine the angular range in which there is a differential signal (54) and generate a corresponding integration signal (53),
- and having threshold value means (27, 37) into which threshold values are in each case inputted and into which in each case the differential signal (54) and the integration signal (53) can be fed and which are equipped so that, when the respective threshold value is exceeded, output signals are produced in each case and are fed into an AND circuit (43), which is equipped so that it generates a control signal for shutting down the means for rotating the body (3) if both a differential signal (54) which exceeds the threshold value and also an integration signal (53) which exceeds the threshold value are simultaneously present.

7. An apparatus according to Claim 6,
**characterised in that** after the AND-circuit (43) there is connected a delay circuit which switch off or shut down the means for rotating the body (3) with a predetermined delay.

8. An apparatus according to Claim 6,
**characterised in that** means are provided for generating the differential signal (54) by differentiation of the surface signal (52).

9. An apparatus according to Claim 6,
**characterised in that** means are provided for generating the integration signal (53) by integration of the surface signal (52).

10. An apparatus according to Claim 8 and 9,
**characterised in that** the means for the differentiation and/or for the integration perform this function over an angular range.

## Revendications

1. Procédé pour la reconnaissance de la position angulaire d'une particularité (5) dans le contour d'une surface extérieure (4) d'un corps (3) sensiblement cylindrique, le corps (3) étant entraîné en rotation autour de son axe de rotation,
- dans lequel le contour de la surface extérieure (4) est analysé et est converti en un signal de (52) surface électrique correspondant,
- dans lequel un signal différentiel (54) est formé entre deux valeurs du signal de surface (52),
- dans lequel la zone angulaire, dans laquelle se trouve un signal différentiel (54), est déterminée et un signal d'intégration (53) correspondant est créé et
- dans lequel un signal de commande est créé lors d'un dépassement simultané de valeurs de seuil prédéterminées pour le signal différentiel (54) et le signal d'intégration (53) et, par ce moyen, l'entraînement en rotation du corps est arrêté.

2. Procédé selon la revendication 1,
**caractérisé en ce que** l'arrêt de la rotation du corps (3) survient avec un retard prédéterminé.

3. Procédé selon la revendication 1,
**caractérisé en ce que** le signal différentiel (54) est créé par différenciation du signal de surface (52).

4. Procédé selon la revendication 1,
**caractérisé en ce que** le signal d'intégration (53) est créé par intégration du signal de surface (52).

5. Procédé selon la revendication 3 ou 4,
**caractérisé en ce que** la différenciation et/ou l'intégration survient sur une zone angulaire.

6. Dispositif pour la reconnaissance de la position angulaire d'une particularité (5) dans le contour d'une surface périphérique extérieure (4) d'un corps (3) sensiblement cylindrique, avec des moyens (1) d'entraînement en rotation du corps (3) autour de son axe de rotation,
- avec des moyens (6), qui, en utilisation, analysent le contour de la surface périphérique extérieure (4) du corps (3) et la convertissent en un signal électrique de surface (52) correspondant,
- avec des moyens (36), qui, en utilisation, créent un signal différentiel (54) dépendant d'une différence entre deux valeurs du signal de surface (52),
- avec des moyens (25) qui, en utilisation, déterminent la zone angulaire dans laquelle se trouve un signal différentiel (54) et créent un signal d'intégration (53) correspondant,
- et avec des moyens de valeurs de seuil (27, 37) dans lesquels sont données respectivement des valeurs de seuil et dans lesquels peuvent être respectivement entrés le signal différentiel (54) le signal d'intégration (53) et qui sont réalisés de sorte que, lors du dépassement de la valeur de seuil respective des signaux de sortie sont respectivement créés et entrent dans un montage ET (43), qui est réalisé de sorte qu'il crée un signal de commande pour arrêter les moyens d'entraînement en rotation du corps (3), lorsque, non seulement un signal différentiel (54) dépassant la valeur de seuil mais encore un signal d'intégration (53) dépassant la valeur de seuil sont présents simultanément.

7. Dispositif selon la revendication 6,
**caractérisé en ce qu'**après le montage ET (43) est monté un circuit à retard, qui débraye ou arrête les moyens d'entraînement en rotation du corps (3) avec un retard prédéterminé.

8. Dispositif selon la revendication 6,
**caractérisé en ce que** les moyens pour créer le signal différentiel (54) sont prévus par différenciation du signal de surface (52).

9. Dispositif selon la revendication 6,
**caractérisé en ce que** les moyens pour créer le signal d'intégration (53) sont prévus par intégration du signal de surface (52).

10. Dispositif selon la revendication 8 ou 9,
**caractérisé en ce que** les moyens de différenciation et/ou d'intégration accomplissent cette fonction par une zone angulaire.
